# EUROPEAN PATENT SPECIFICATION

(11) **EP 0 938 989 B1**
(45) Date of publication and mention of the grant of the patent: **07.07.2004**
(21) Application number: 98122972.7
(22) Date of filing: 03.12.1998
(51) Int. Cl.: B60H 1/00

(54) **Sensor fixture**
Befestigung eines Sensors
Fixation d'un capteur

(30) Priority: 26.02.1998 DE 29803388 U
(43) Date of publication of application: 01.09.1999
(73) Proprietor: Finber S.p.A, 43100 Scarzara (Parma) (IT)
(72) Inventor: Edel, Jacques, 92100 Boulogne-Billancourt (FR); Bernini, Michele, 43100 Parma (IT)
(74) Representative: Grünecker, Kinkeldey, Stockmair & Schwanhäusser Anwaltssozietät

(56) References cited:
- EP-A- 0 450 703
- EP-A- 0 539 944
- DE-A- 4 319 293
- FR-A- 2 686 690
- FR-A- 2 723 202
- GB-A- 1 220 842
- US-A- 4 217 765

## Description

The present invention relates to a sensor fixture according to the preamble part of claim 1.

In today's highly advanced vehicle air conditioning systems, different sensors actuated by the cooling agent are used, the signals of which, e.g., serve to control and/or monitor the air conditioning system. As is usually the case in small-sized, as well as larger-sized vehicles, much space is already occupied in the motor compartment, so that any reduction of mounting space for elements of the air conditioning system is of vital importance to automobile manufacturers. Also possible savings of weight and a reduction of manufacturing steps are of equal importance.

Usually, (Fig. 4) sensors for air conditioning systems are designed with a foot part, made of metal, which receives the reaction component of the sensor and serves to fix the sensor at its operating location. The reaction component incorporated into said foot part is positioned and sealed; e.g., by crimping. Said foot part is formed with manipulating means, e.g. a hexagonal part, and with a fixture element; e.g., a threaded projection, by means of which said sensor is fixed in the piping- or container-component, as eg shown in DE 4379293A. The foot part enlarges the mounting space for the sensor in an undesirable manner, and frequently is heavier than the reaction component itself. Furthermore, said foot part constitutes an important factor of the manufacturing costs of the sensor. Due to the threaded connection, no predetermined rotary operating position of the sensor is possible, as would be required in automatized assembly lines when connecting cable connectors to the sensor terminals.

US-A-4,217,765 discloses a lever sensor directly inserted into a heat exchanger accumulator housing wall.

The sensor of FR-A-27 23 202, Fig. 14, is prefabricated for a sensor fixture where the outer housing of the reaction component directly is fixed without a separate foot part. The housing is formed with a fixing structure at its lower end. The fixing structure is constituted by four circumferentially distributed, separated axial arms with outwardly protruding hooks at the free end of the arm, serving to establish a clipped fixation.

In DE-A-43 19 293, two sensors are shown in a condenser of a air conditioning system. One of the sensors is a pressure pick-up or pressure switch threaded with a threaded protrusion of its foot part into a threaded bore of a closure lid of a collection channel of a condenser, said closure lid having a channel for the cooling agent or the pressure transmission, respectively. The other of said sensors is a level sensor, the probe of which is received in a foot part which penetrates the bottom portion of the condenser and reaches into said collecting channel and which is fixed by means of an external thread engaging in a threaded bore of said bottom portion.

It is a task of the present invention to create a simple sensor fixture allowing to reduce mounting space and weight, to reduce the manufacturing costs of the sensor, and to mount the sensor in a predetermined rotary operating position.

Said task is achieved according to the invention by the features of claim 1.

As the reaction component of the sensor is directly secured in the piping- or container-component, i.e. without using a reaction component receiving foot part, mounting space and weight can be saved and the production of the sensor is simplified and less costly. It is necessary to structurally prepare the outer housing of the reaction component for the direct fixation in the holding socket, e.g of the piping- or container-component. A predetermined rotary operating position can be realized as well. The holding socket is pre-designed for the direct fixation of the reaction component only. In the holding socket, the connecting section of the reaction component is attached such that the cooling agent can actuate or contact the reaction component directly within the holding socket. Optionally, a sealing element is interposed between the reaction component and the holding socket. As the reaction component is fixed in a predetermined rotary position, the sensor terminals are already oriented for easy connection with a cable connector.

By the crimped connection, the necessary holding effect and sealing effect are achieved solely by crimping the crimping edge or discrete crimping projections and by a positive and forceful holding. An additional glued or welded connection can secure the reaction component very reliably; hermetically sealed and durable.

The sensor can be a single stage or a multistage pressure switch or a pressure measuring device, a thermostat or temperature measuring device, a level measuring or switching device, a flow rate metering or registering device, or a combination sensor containing, e.g., more than one pressure switch or measuring device or temperature switching or measuring device.

The crimping edge of the holding socket grips over the supporting shoulder of the connecting section so that the connecting section is positively and forcefully fixed within the holding socket. Additional positioning means could be provided to assure a predetermined rotary position.

Optionally, an annular groove for inserting a sealing ring is formed within the holding socket, or alternatively the sealing ring is located on the outer periphery of the reaction component connection portion.

Embodiments of the invention, as well as a schematic view representing prior art, will be described with the help of the drawing. In the drawing is:
- Fig. 1: a plane view, partially cut-out, of a sensor fixture,
- Fig. 2: the sensor fixture of Fig. 1 prior to assembly, according to the present invention,
- Fig. 3: an enlarged cross section of the holding socket of the sensor fixture, and
- Fig. 4: a cross sectional view of a conventional sensor fixture.

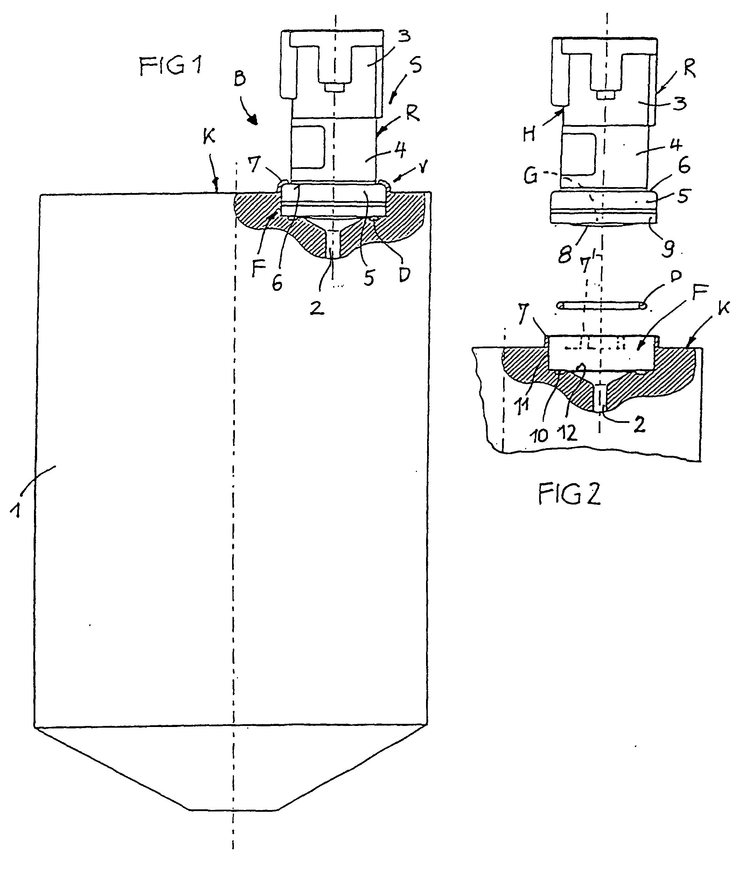

A sensor fixture B exemplifie in Figs. 1 and 2 in a vehicle air conditioning system (not shown) how, e.g., a pressure switch responding to the pressure of the cooling agent is fixed to a container 1. Said pressure switch generally is a sensor S consisting, in this case, only of a reaction component R which directly is attached in sensor fixture B to a piping- or container- component K containing the cooling agent. Component K is provided, e.g. in its topside or in a lid provided there, with a holding socket F into which the reaction component R engages with a connecting section 5. Said connecting section 5 is the end part of a, e.g., round neck part 4 below an upper part 3 of an outer housing H of the reaction component R, e.g., made from plastic material. The connecting section 5 is thickened in relation to neck part 4 and is designed with a supporting shoulder 6. An inwardly displaced crimping edge 7 of holding socket F grips over said shoulder 6. Reaction component R can be fixed in a predetermined rotary operation position in relation to holding socket F. Below reaction component R, a sealing element D is inserted. A channel 2 for the cooling agent terminates inside said sealing element D such that the lower side of the connecting section 5 is in direct contact with the cooling agent within holding socket F.

In Fig. 2, the parts are shown prior to assembling the sensor fixture B. The holding socket F in component K is a blind bore recess 11 having a slightly larger diameter than the connecting section 5 of the reaction component R. Said recess 11 can be made by drilling or turning. In the bottom 12 of recess 11, a circular, upwardly-open groove 10 is formed for sealing element D. Channel 2 terminates essentially in the center of holding socket F. The crimping edge 7 can be continuous in circumferential direction and protrudes beyond the topside of component K. Alternatively, instead of a continuous crimping edge, separate crimping projections 7' could be provided.

Prior to inserting the reaction component R into the holding socket F, an O-ring constituting said sealing element D is inserted into groove 10. As soon as the connecting section 5 of the reaction component R is inserted into the holding socket, the upright crimping edge 7 is crimped by means of a suitable tool (not shown).

The reaction component R can contain, as usual, at least one sensing member G which is exposed freely at a position at the lower side of connecting section 5 in order to come in contact with the cooling agent. Alternatively, sensing member G can be covered by a diaphragm 8 which is clamped in the shown embodiment by means of a ring flange 9 to connecting section 5.

In Figs. 1 and 2, the reaction component R is directly fixed to the topside of the container; e.g., a dryer- or accumulator- container of an air conditioning system.. Alternatively, such a container could be equipped with a separate lid- or bottom- part which contains the at least one holding socket F. Said lid- or bottom- part can be attached to the container in a conventional manner. Furthermore, said component K also could be a so-called connection-fitting, securable to the top of an cooling agent container or a piping, respectively, thus serving as a carrier for the reaction component R. Component K instead could be a condenser-housing part or closure lid, a dryer cartridge or dryer cartridge insert, or a compressor housing or closure lid. Component K, can be made of metal, preferably light metal, and could be disk-shaped.

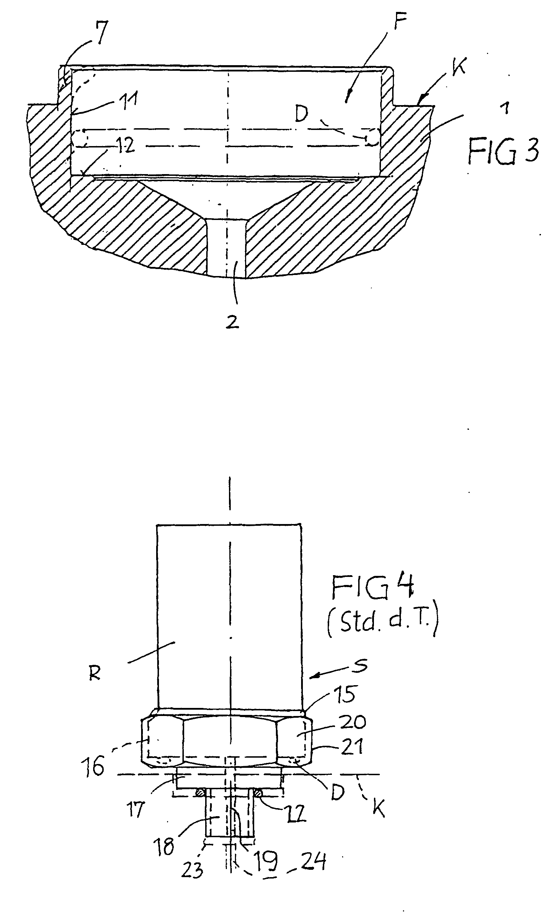

In Fig. 3, modified holding socket F is shown in enlarged scale. It is formed by turning, drilling, milling or pressing with a dimension allowing for the insertion of the connecting section 5 of reaction component R with radial clearance prior to forcing crimping edge 7 inwardly in order to position and hold reaction component R sealed by sealing element D. Said sealing element here is positioned between the wall of recess 11 and is compressed radially.

In comparison to a conventional fixture using a foot part, the shown sensor fixture B having directly secured connecting section 5 in the holding socket F significantly reduces mounting depth as well as mounting space conventionally occupied in diametrical direction when compared with the relatively bulky known foot part (see Fig. 4).

Fig. 4 represents a conventional sensor fixture. The sensor S is provided with a foot part 20 having a hexagonal section 21 and a threaded projection 18. Foot part 20 is normally made from metal. The reaction component R of the sensor is positioned and secured within foot part 20, e.g. by potting or crimping at 15. Channel 19 extends through threaded projection 18 towards reaction component R. Insert has to be prefabricated with reaction component R. Below foot part 20, O-ring 22 is provided. Inside foot part 20 an additional sealing element O is needed. Component K has to have threaded bore 23 and supply channel 24. Foot part 20 occupies considerable mounting height and also relatively large space aside threaded bore 23. In addition, the considerable weight of foot part 20 is undesirable. In the interior of foot part 20 a further sealing element is needed.

## Claims

1. Sensor fixture, for a vehicle air conditioning system, comprising a holding socket (F) of a piping component or a container component (K), and a sensor (S) having a sensing member (G) and at least one signal generating reaction component (R), responding to pressure and/or temperature and/or presence or absence and/or flow and/or the present level of a cooling agent, said reaction component (R) having an outer housing (H) receiving said sensing member (G), **characterised in that** said outer housing (H) comprises an upper part (3) and neck part (4) extending downwardly from said upper part (3), that said neck part (4) has a lower end part defining a connecting section (5) of said sensor (S), that said connecting section (5) is thickened in relation to said neck part (4) and is designed with a supporting shoulder (6), that said connecting section (5) is inserted into said holding socket (F), and that said holding socket (F) has a circumferentially continuous crimping edge (7) or circumferentially separated crimping projections (7), respectively, which are displaced inwardly to grip over said support shoulder (6) and to hold said sensor (S) in the operative position in said holding socket (F).

2. Sensor fixture as in claim 2, **characterised in that** said reaction component (R) is fixed in a predetermined rotary operation position in said holding socket (F).

3. Sensor fixture as in claim 1, **characterised in that** said holding socket (F) is a blind bore recess (11) connected to a cooling agent channel (2).

4. Sensor fixture as in claim 3, **characterised in that** an annular groove (10) for receiving a sealing element (D), e.g. an O-ring, is formed in the bottom (12) of said blind bore recess (11).

5. Sensor fixture as in claim 3, **characterised in that** a radially compressed O-ring is located between an outer periphery of said connecting section (5) and an inner wall of said blind bore recess (11').

6. Sensor fixture as in claim 1, **characterised in that** said sensing member (G) is covered at the lower free side of said connecting section (5) of said outer housing (H) by a diaphragm (8) clamped by a ring flange (9) to said connecting section (5).

7. Sensor fixture as in claim 1, **characterised in that** said reaction component (R) with its sensing member (G) defines a single stage or multi-stage pressure switch or pressure measuring device, or a thermostatic or temperature measuring device, or a level measuring device or level switch, or a flow metering or flow registering device, or a sensor registering the absence or presence of a cooling agent, or a combined switching and/or measuring and/or detecting device.

8. Sensor fixture as in claim 1, **characterised in that** said holding socket (F) is provided in a dryer container or an accumulator container (1), or a container lid or a container bottom (13), or a condenser closure lid or an evaporator closure lid, or a dryer cartridge bottom insert or a dryer cartridge cover lid insert, or a connector fitting of a cooling piping.

## Patentansprüche

1. Sensorbefestigung für ein Fahrzeug-Klimaanlagensystem, mit einer Haltefassung (F) einer Verrohrungskomponente oder einer Behälterkomponente (K), und einem Sensor (F) mit einem Fühlglied (G) und wenigstens einer signalgenerierenden Reaktionskomponente (R), die anspricht auf Druck und/oder Temperatur und/oder die Anwesenheit oder Abwesenheit und/oder den Strom und/oder das vorhandene Niveau eines Kältemittels, wobei die Reaktionskomponente (R) ein das Fühlglied (G) aufnehmendes äußeres Gehäuse (H) hat, **dadurch gekennzeichnet, dass** das äußere Gehäuse (H) einen oberen Teil (3) und einen Kragenteil (4) umfasst, der sich von dem oberen Teil (3) nach unten erstreckt, dass der Kragenteil (4) einen unteren Endteil besitzt, der eine Verbindungssektion (5) des Sensors (S) definiert, dass die Verbindungssektion (5) in Relation zu dem Kragenteil (4) verdickt und mit einer abstützenden Schulter (6) ausgebildet ist, dass die Verbindungssektion (5) in die Haltefassung (F) eingesetzt ist, und dass die Haltefassung (F) einen in Umfangsrichtung kontinuierlichen Bördelrand (7) oder in Umfangsrichtung separierte Bördelvorsprünge (7) aufweist, respektive, welcher bzw. welche einwärts verlagert sind, um über die Abstützschulter (6) zu greifen und den Sensor (S) in der operativen Position in der Haltefassung (F) zu halten.

2. Sensorbefestigung nach Anspruch 1, **dadurch gekennzeichnet, dass** die Reaktionskomponente (R) in der Haltefassung (F) in einer vorbestimmten Dreh-Operationsposition fixiert ist.

3. Sensorbefestigung nach Anspruch 1, **dadurch gekennzeichnet, dass** die Haltefassung (F) eine Blindbohrungsvertiefung (11) ist, die mit einem Kanal (2) für das Kältemittel verbunden ist.

4. Sensorbefestigung nach Anspruch 3, **dadurch gekennzeichnet, dass** im Grund (12) der Blindbohrungsvertiefung (11) eine ringförmige Nut (10) zum Aufnehmen eines Dichtungselements (D), z.B. eines O-Rings, geformt ist.

5. Sensorbefestigung nach Anspruch 1, **dadurch gekennzeichnet, dass** zwischen einer äußeren Peripherie der Verbindungssektion (5) und einer Innenwand der Blindbohrungsvertiefung (11') ein radial komprimierter O-Ring angeordnet ist.

6. Sensorbefestigung nach Anspruch 1, **dadurch gekennzeichnet, dass** das Fühlglied (G) an der unteren freien Seite der Verbindungssektion (5) des äußeren Gehäuses (H) durch eine Membrane (8) abgedeckt ist, die durch einen Ringflansch (9) an die Verbindungssektion (5) geklemmt ist.

7. Sensorbefestigung nach Anspruch 1, **dadurch gekennzeichnet, dass** die Reaktionskomponente (R) mit ihrem Fühlglied (G) einen Einstufen- oder Mehrstufen-Druckschalter oder eine Messvorrichtung, oder eine thermostatische oder Temperaturmessvorrichtung, oder eine Füllstandsmessvorrichtung oder einen Füllstandsschalter, oder eine Strommessvorrichtung oder Stromregistriervorrichtung, oder einen Sensor zum Registrieren des Vorhandenseins oder der Abwesenheit eines Kältemittels, oder eine kombinierte schaltende und/oder messende und/oder detektierende Vorrichtung definiert.

8. Sensorbefestigung nach Anspruch 1, **dadurch gekennzeichnet, dass** die Haltefassung (F) in einem Trocknerbehälter oder einem Akkumulatorbehälter (1), oder einem Behälterdeckel oder einem Behälterboden (13), oder einem Kondensatorverschlussdeckel oder einem Verdampferverschlussdeckel, oder einem Trockner-Patronen-Bodeneinsatz oder einem Trockner-Patronen-Verschlussdeckeleinsatz, oder einem Connectorfitting einer Kühlverrohrung vorgesehen ist.

## Revendications

1. Fixation de capteur, pour un système de climatisation de véhicule, comprenant un support de maintien (F) d'un composant de tuyauterie ou d'un composant de conteneur (K) et un capteur (S) comportant un élément de détection (G) et au moins un composant de réaction de génération de signal (R), réagissant à la pression et/ou à la température et/ou à la présence ou l'absence et/ou à une circulation et/ou au niveau actuel d'un agent de refroidissement, ledit composant de réaction (R) comportant un boîtier extérieur (H) recevant ledit élément de détection (G), **caractérisée en ce que** ledit boîtier extérieur (H) comprend une partie supérieure (3) et une partie de col (4) s'étendant vers le bas à partir de ladite partie supérieure (3), **en ce que** ladite partie de col (4) comporte une partie d'extrémité inférieure définissant une section de raccordement (5) dudit capteur (S), **en ce que** ladite section de raccordement (5) est plus épaisse relativement à ladite partie de col (4) et est conçue avec un épaulement de support (6), **en ce que** ladite section de raccordement (5) est insérée dans ledit support de maintien (F), et **en ce que** ledit support de maintien (F) comporte un bord de sertissage circonférentiellement continu (7) ou des protubérances de sertissage circonférentiellement séparées (7), respectivement, qui sont déplacées vers l'intérieur pour s'accrocher sur ledit épaulement de support (6) et pour maintenir ledit capteur (S) dans la position de fonctionnement dans ledit support de maintien (F).

2. Fixation de capteur selon la revendication 2, **caractérisée en ce que** ledit composant de réaction (R) est fixé dans une position de fonctionnement rotative prédéterminée dans ledit support de maintien (F).

3. Fixation de capteur selon la revendication 1, **caractérisée en ce que** ledit support de maintien (F) est un évidement de trou borgne (11) relié à un canal d'agent de refroidissement (2).

4. Fixation de capteur selon la revendication 3, **caractérisée en ce qu'**une gorge annulaire (10) pour recevoir un élément d'étanchéité (D), par exemple, un joint torique, est formée dans le fond (12) dudit évidement de trou borgne (11).

5. Fixation de capteur selon la revendication 3, **caractérisée en ce qu'**un joint torique comprimé radialement est situé entre une périphérie extérieure de ladite section de raccordement (5) et une paroi intérieure dudit évidement de trou borgne (11).

6. Fixation de capteur selon la revendication 1, **caractérisée en ce que** ledit élément de détection (G) est recouvert, du côté libre inférieur de ladite section de raccordement (5) dudit boîtier extérieur (H), par une membrane (8) serrée par une bride annulaire (9) sur ladite section de raccordement (5).

7. Fixation de capteur selon la revendication 1, **caractérisée en ce que** ledit composant de réaction (R) avec son élément de détection (G) définit un pressostat ou un dispositif de mesure de pression à étage unique ou à étages multiples, ou un dispositif thermostatique ou de mesure de température, ou un dispositif de mesure de niveau ou un contacteur de niveau, ou un dispositif de mesure de débit ou d'enregistrement de débit, ou un capteur enregistrant l'absence ou la présence d'un agent de refroidissement, ou un dispositif combiné de commutation et/ou de mesure et/ou de détection.

8. Fixation de capteur selon la revendication 1, **caractérisée en ce que** ledit support de maintien (F) est prévu dans un conteneur de déshydrateur ou dans un conteneur d'accumulateur (1), ou dans un couvercle de conteneur ou dans un fond de conteneur (13), ou dans un couvercle de fermeture de condenseur ou dans un couvercle de fermeture d'évaporateur, ou dans un insert de fond de cartouche de déshydrateur ou dans un insert de couvercle de cartouche de déshydrateur, ou dans un raccord de connecteur d'une conduite de refroidissement.
